# EUROPEAN PATENT SPECIFICATION

(11) **EP 1 452 346 B1**
(45) Date of publication and mention of the grant of the patent: **11.01.2012**
(21) Application number: 04100601.6
(22) Date of filing: 13.02.2004
(51) Int. Cl.: B60C 15/06, B60C 15/00

(54) **Aircraft tyre with improved bead structure**
Flugzeugreifen mit verbesserter Wulstkonstruktion
Pneumatique d'avion à bourrelet perfectionné

(30) Priority: 25.02.2003 US 374015
(43) Date of publication of application: 01.09.2004
(73) Proprietor: The Goodyear Tire & Rubber Company, Akron, OH 44316-0001 (US)
(72) Inventor: Ueyoko, Kiyoshi, Fairlawn, 44333 Ohio (US); Boehlefeld, Robert John, Brecksville, 44141 Ohio (US); Slivka, John Joseph, Danville, 24541 Virginia (US)
(74) Representative: Kutsch, Bernd

(56) References cited:
- EP-A- 0 396 494
- EP-A- 0 463 273
- US-A- 2 592 844
- US-A- 3 038 518
- US-A- 5 769 982

## Description

### Field of the Invention

The present invention relates to a tire with a carcass reinforcement and an improved bead intended to support heavy loads while being inflated to relatively high pressures for high speed use, in particular an airplane tire.

### Background of the Invention

The radial carcass reinforcements of aircraft tires generally comprise several plies of textile cords, which are anchored in each bead to at least one bead core generally formed having a single continuously wound bead wire. The reinforcing elements of these reinforcements are wound around said bead core from the inside to the outside, forming turn-ups, the respective ends of which are spaced radially from the axis of rotation of the tire. The severe conditions under which airplane tires are used are such that the life of the beads is short, particularly in the area of the turn-ups of the carcass reinforcement.

A substantial improvement in performance is obtained by the separating of the plies of the carcass reinforcement into two groups. The first group comprises the plies of the carcass reinforcement which are axially towards the inside in the region of the beads, these plies being then wound around a bead core in each bead from the inside to the outside of the tire. The second group is formed of at least one axially outer ply in the region of the beads, which ply is generally wound around the bead core from the outside to the inside of the tire. Such arrangements are known; for instance, in US-A- 4,244,414.

The life of beads formed in this manner can be improved by the presence in each bead of an additional reinforcement ply, wound around the bead wire and thus forming an axially outer leg and an axially inner leg, said reinforcement ply, also known as an inner flipper, being the ply closest to the rubber filler, radially above the anchoring bead core. A tire structure of this type is shown in US-A- 5,285,835. In US-A- 5,769,982, the life of the beads of airplane tires can be further improved, particularly when they are subjected to heavy overloads which can result in a crushing deflection of the order of 50% and more of their height, by having the arrangement of the ends of the turned-up portions or turn-ups of the inner carcass plies and the ends of the legs of the inner flipper with respect to the radial position of the radially upper end of the rubber filler located above the anchoring bead core and the filler.

In accordance with that invention, an airplane tire, inflated to a high pressure, having a tread, a crown reinforcement, and a radial carcass reinforcement comprising at least two axially inner plies of textile cords wound around a bead core in each bead from the inside to the outside forming turn-ups and at least one axially outer ply of textile cords superimposed on the inner plies below the crown reinforcement and along the turn-ups in said beads, said bead core being radially surmounted by a filler of vulcanized rubber mix, having the shape substantially of a triangle, the apex of which radially furthest from the axis of rotation is at a distance D from a straight line parallel to said axis, passing through the geometrical center of the circle circumscribed on the cross-section of the anchoring bead core, known as the reference line, and also comprising at least one inner flipper wound around the bead core to form an axially inner leg and an axially outer leg which are axially adjacent to the filler above the bead core, characterized by the fact that the end of the axially outer leg of the inner flipper is located at a radial distance L_{E} from the reference line such that L_{E} is between 0.40 D and 0.80 D; the end of the turn-up of the inner carcass ply arranged axially furthest to the inside is located at a distance H_{A} from the reference line such that H_{A} is between 0.15 D and 0.50 D, and by the fact that the ends respectively of the inner leg of the inner flipper and of the turn-ups of the inner carcass ply or plies which are axially furthest to the outside.

While this construction is durable, it limits the number of carcass plies that can be provided in the bead area and the extended length of the flipper means that the outer plies being turned down around the bead and the inner plies are spaced from the natural ply path of the tire in the region of the flipper. This spacing, while believed desirable, results in one less ply being available in the structure and in the case of very large aircraft the tire structure ideally may require the use of another ply which is effectively precluded by the use of the extended length flipper. The areas directly inward of the bead core and axially outward are respectively called the bead base and the bead flange areas. These areas are in direct contact with the rim and accordingly a tough durable rubber compound commonly referred to as a chafer is used in this area. The increased loads of these aircraft tires particularly directly between the bead core and the rim bead seat experience very high loads. The use of round bead cores and radial plies create a rocking action under taxiing and straight line driving on takeoffs that can cause the chafer to crack.

It is an object of the present invention to provide a lightweight efficient tire structure having superb durability and not prone to bead chafer cracks.

It is a further object of the present invention to provide an improved bead structure wherein the use of inside turn-up plies and outside turndown plies is optimized by the placing of the plies close to the natural ply path.

US-A- 3,038,518 describes a tire according to the preamble of claim 1.

### Summary of the Invention

A pneumatic tire for use on aircraft has a nominal bead diameter N_{BD}, a crown reinforcement, and a radial carcass reinforcement having at least two axially inner plies of textile cord wound around a pair of bead cores, the bead cores having a maximum radial height B. Each inside ply is wound around the bead from inside to outside forming outside turn-ups. At least one axially outer ply of textile cords extends from bead to bead along the turn-ups of the inner plies. Each bead has an elastomeric filler of substantially triangular shape, the apex of the filler is located above the bead core extending to an apex A as measured from a line YY parallel to the axis of the tire and passing through the location of the nominal bead diameter or as measured from a reference line XX parallel to the axis of rotation and passing through the geometric center of the bead core.

The tire preferably has a flipper wound around the bead core to form an axially inner leg and an axially outer leg, the axially inner leg is located at a radial distance L_{¡} from the reference line YY or XX and the axially outer leg is located a radial distance Lₑ from the reference line YY or XX. The flipper is oriented where B<L_{E}<0.7D and Bₕ<L_{I}<0. 7D and at least one axially inner ply has turn-ups when the tire has two or more axially inner plies, at least one turn-up is radially above the apex location A and at least one turn-up is below the location A.

The ends of the axially outer leg of the flipper and the ends of the turn-ups of the inner plies are preferably radially staggered.

The tire has a bead reinforced with a woven chipper material, preferably a square woven textile material. The chipper material has a radially inner end E₁ and an axially outer end E_{E}. The axially outer portion of the chipper is embedded in a rubber chafer material above the bead base surface and inward of the bead flange surface. The axially outer end E_{E} is terminated radially below B_{H} the top of the bead core, preferably between the center and the top of the bead core. The radially inner end E, is turned radially toward the bead core and is terminated between the bead core and the bead base. In the preferred embodiment the chipper is made of nylon 6, 6.

### Definitions

"Apex" means a non-reinforced elastomer positioned radially above a bead core.

"Aspect ratio" of the tire means the ratio of its section height (SH) to its section width (SW) multiplied by 100% for expression as percentage.

"Axial" and "axially" means lines or directions that are parallel to the axis of rotation of the tire.

"Bead" means that part of the tire comprising an annular tensile member wrapped by ply cords and shaped, with or without other reinforcement elements such as flippers, chippers, apexes toe guards and chafers, to fit the design rim.

"Belt or breaker reinforcing structure" means at least two layers of plies of parallel cords, woven or unwoven, underlying the tread, unanchored to the bead, and having both left and right cord angles in the range from 17° to 33° with respect to the equatorial plane of the tire.

"Bias ply tire" means a tire having a carcass with reinforcing cords in the carcass ply extending diagonally across the tire from bead core to bead core at about a 25°-50° angle with respect to the equatorial plane of the tire. Cords run at opposite angles in alternate layers.

"Carcass" means the tire structure apart form the belt structure, tread, under tread, and sidewall rubber over the plies, but including the beads.

"Circumferential" means lines or direction extending along the perimeter of the surface of the annular tread perpendicular to the axial direction.

"Chafers" refers to narrow strips of material placed around the outside of the bead to protect cord plies from the rim, distribute flexing above the rim, and to seal the tire.

"Chippers" means a reinforcement structure located in the bead portion of the tire.

"Cord" means one of the reinforcement strands of which the plies in the tire are comprised.

"Equatorial plane (EP)" means the plane perpendicular to the tire's axis of rotation and passing through the center of its tread.

"Flipper" means a reinforced fabric wrapped about the bead core.

"Footprint" means the contact patch are area of the tire tread with a flat surface at zero speed and under normal load and pressure.

"Innerliner" means the layer or layers of elastomer or other material that form the inside surface of a tubeless tire and that contain the inflating fluid within the tire.

"Net-to-gross ratio" means the ratio of the tire tread rubber that makes contact with the road surface while in the footprint, divided by the area of the tread in the footprint including non-contacting portions such as grooves.

"Normal inflation pressure" refers to the specific design inflation pressure and load assigned by the appropriate standards organization for the service condition for the tire.

"Ply" means a continuous layer of rubber-coated parallel cords.

"Radial" and "radially" means directions radially toward or away from the axis of rotation of the tire.

"Radial-ply tire" means a belted or circumferentially-restricted pneumatic tire in which the ply cords which extend from bead to bead are laid at cord angles between 65° and 90° with respect to the equatorial plane of the tire.

"Section height (SH)" means the radial distance from the nominal rim diameter of the tire at its equatorial plane.

### Brief Description of the Drawings

The invention will be described by way of example and with reference to the accompanying drawings in which:

The invention will be described by way of example and with reference to the accompanying drawings in which:
Figure 1 is a partial cross-sectional view of the prior art tire bead as described in US-A- 5,769,982;
Figures 2 and 3 are a partial cross-sectional views of the bead portion of the tire made according to the present invention;
Figure 4 is a cross-sectional view of the tire;
Figures 5A, 5B and 5C, and 5D are partial cross-sections showing the tire of the present invention;
Figure 6 is a partial view of the bead seat and chipper;
Figure 6A is a partial view of the chafer and chipper taken along lines 6A-6A of Figure 6.

### Detailed Description of the Invention

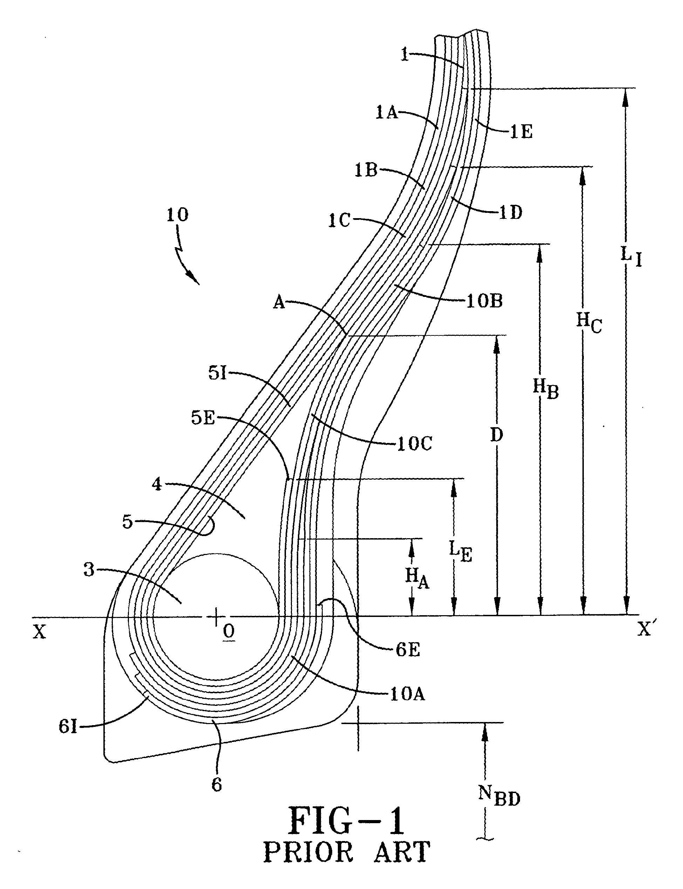

With reference to Figure 1, diagrammatic view in cross section of a prior art tire bead in accordance to US-A- 5,769,982 is shown.

The example described is that of a prior art tire 10 of standard size 36x11.0 R 18 (standards of the Tire and Rim Association). The carcass reinforcement 1 is formed of five plies 1A to 1 E of radial textile cords. Radial cords, as the term is used herein, are cords which form with the circumferential direction of the tire angles which may be within the range of 90°+/- 10°. Among these five plies, three axially inner plies 1A, 1B, 1C are wound in each bead 2 around a bead wire 3 shown in the drawing as having a circular cross section, extending from the inside to the outside of the tire P in order to form turn-ups 10A, 10B, 10C.

The cross section of the bead wire 3 is surmounted radially towards the outside by a strip or filler 4 of elastomeric mix having substantially the shape of a triangle, the apex A of which, radially furthest from the axis of rotation of the tire, is located at a distance D from a reference line XX. The reference line is parallel to the axis of rotation and through the geometrical center O of the circle circumscribed on the cross section of the bead wire 3, which circle, in the case described, is identical with the cross section itself.

The turn-up 10A of the inner carcass ply 1A axially furthest towards the inside has its end spaced radially form the line XX by the amount H_{A}, which is equal, in the case studied, to 12mm, namely 0.33 times the distance D, D being equal to 36mm. As to the ends of the inner plies 10B and 10C, respectively, they are located radially above the apex A of the filler 4 at distances H_{B} and H_{C} of 55mm and 68mm, respectively.

The same is true of the radial end of the axially inner leg of a flipper 5, which can be formed of radial textile cords identical to the carcass ply cords (but which may also be different), which end is located at a radial distance Lₗ of 80 mm from the line XX , a distance greater than the distances H_{B} and H_{C} referred to above, the three ends thus arranged radially above the apex A being staggered between said apex and the point of the sidewall where the tire has a maximum axial width. As to the radial end of the axially outer leg 5E of the inner flipper 5, it is spaced from the line XX by the radial distance Lₑ equal to 0.58 D and greater than the distance H_{A}.

The two carcass plies 1D and 1E, herein called outer plies, cover the turn-ups 10A, 10B, 10C of the inner carcass plies 1A to 1C axially on the outside. The plies 1D and 1E are wound around the bead wire 3 over a portion or circular arc corresponding to an angle at the center of the circle circumscribed on the bead wire 3 equal to at most 180°, so that the ends of these plies 1D and 1E are situated radially below the reference line XX .

The tire bead 2 is supplemented by a reinforcement ply 6 or outer chafer of radial textile cords, said ply permitting a better distribution of the pressures between the tire and its service rim, as well as assuring protection of the carcass plies against injury upon mounting.

The axially outer end 6E of said chafer is slightly above (about 2 mm) the reference line XX , while its axially inner end 6I is below said line.

This prior art structure has been tested on a dynamometric flywheel under punishing conditions for beads of this type, these conditions corresponding to a simulation of travel on a runway (10160kg, 4572 m, 46 km/hr), followed by a take-off from 0 to 300 km/hr, the pressure conditions being such that the crushing of the tire under the load of 10160kg is 50% +/- 2% of its height.

Comparison with another prior art tire of the same size comprising the same number of carcass plies and inner and outer flipper and chafer, the inner carcass ply furthest to the inside having a turn-up end of which is located above the apex A, and the outer leg of the inner flipper having its end below said apex, clearly and unexpectedly shows the improvement, in the life of the beads, since the tires of the invention, under the above conditions, have completed on the average 35% more runway-take-off cycles.

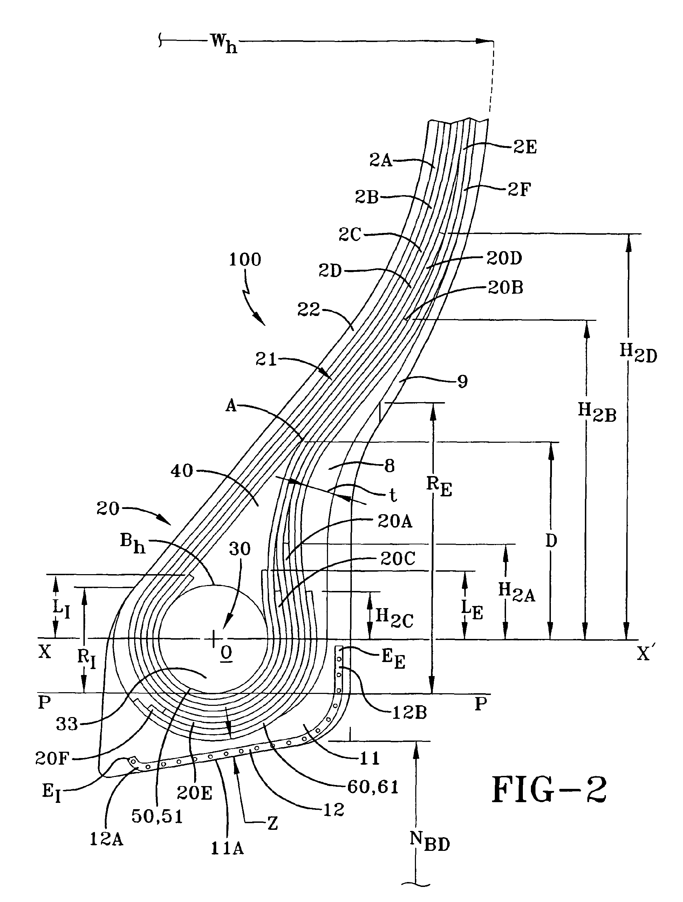

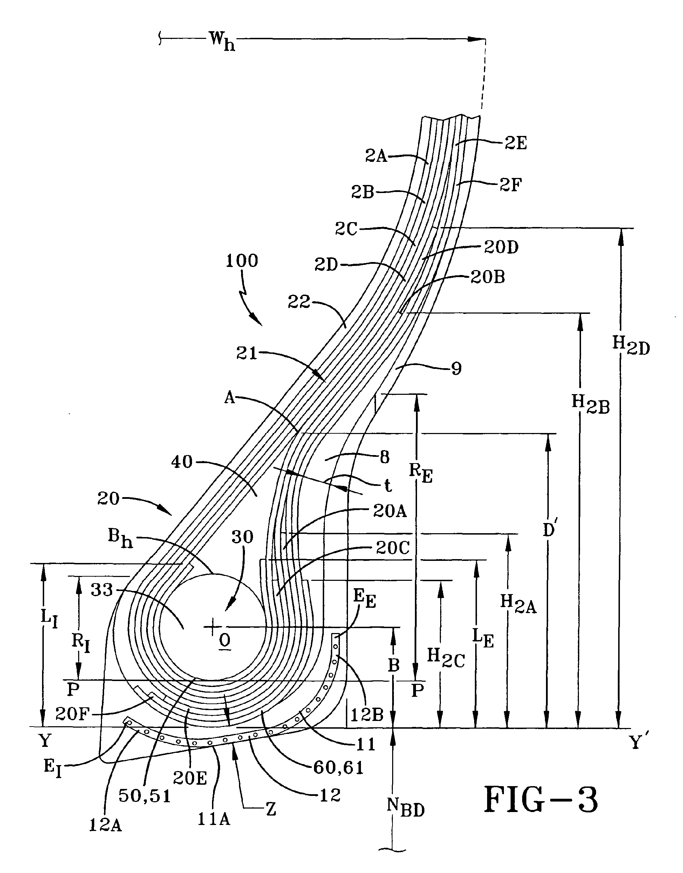

In contrast, the tire 100 of the present invention is illustrated in a diagrammatic view in cross-section Figures 2 and 3.

The example shown is that of a tire of standard size 50x20.OR22 (standard of the Tire and Rim Association).

With reference to Figures 2 and 3, the carcass reinforcement 20 is formed of six plies 2A to 2F of radial textile cords 21. The ply cords 21 can be nylon, rayon, or Kevlar™, or steel. Among these six plies, four axially inner plies 2A, 2B, 2C and 2D are wound in each bead around a bead core 33 shown in the drawing having circular cross section. These four plies extend from the inside to the outside of the tire in order to form turn-ups 20A, 20B, 20C and 20D. The carcass reinforcement is radially outward of the innerliner 22 of tire 100.

Outward of the bead core 33 is a strip or filler 40 of elastomeric material commonly referred to as an apex 40 having a substantially triangular shape extending to an apex location A radially furthest from the axis and located a distance D from a reference line XX . As was shown in Figure 1 the reference line is also parallel to the axis of rotation and through the geometric center O, of the circle circumscribed on the cross section of the bead core 33.

The turn-up 20A of the inner carcass ply 2A axially furthest toward the inside has its end spaced radially from line XX by the amount H_{2A}, which is, for this exemplary tire size, equal to 29 mm or 0.6 times the distance D, D being equal 48 mm.

As shown, the tire of Figure 3 has a nominal bead diameter N_{BD} of 22.00 inches (558.8 mm). The line YY passing through the location of the nominal bead diameter and parallel to the tires axis of rotation wherein the inner most ply 2A has the turn-up 20A at end H_{2A} located 2.0 inches (51 mm) above the line YY as illustrated in Figure 3. For comparative purposes with the prior art tire of Figure 1, Figure 2 shows all the relationship relative to the reference line XX . In Figure 3 all these components are shown relative to the reference line YY . This reference line is parallel to and passed through the nominal bead diameter N_{BD}.

As to the turn-up ends 20B, 20C and 20D of the inner plies 2B, 2C and 2D respectively they are located at a distance H_{2B}, H_{2C} and H_{2D} of 85.5 mm, 17.1 mm and 106 mm above the line XX respectively, or as measured from line YY in Figure 3, H_{2A}, H_{2B}, H_{2C} and H_{2D} are located 50.8 mm, 106.5 mm, 38.1 mm, and 127 mm, respectively. This construction insures the ends are all staggered having pairs of ends 20B and 20D well above the apex A location and pairs of ends 20A and 20C well below the apex A, each pair set 20A, 20C or 20B, 20D is preferably spaced at least 2.0 inches (50.8 mm) apart. The lowest pair of ends is located very close to the bead and is interposed between the bead and the rim flange vertical surface.

As opposed to the prior art tire having three plies 1A, 1B and 1C wherein the ends location satisfies a relationship where 10A<10C<10B the present invention has the ends location satisfy the relationship where 20C<20A<20B<20D. As shown this creates an opportunity to have a very efficient bead structure. The plies 2A through 2D provide a unique combination of ply ends 20A, 20C wherein 0.5 Bₕ < 20C < 20A < 0. 7D. As shown the next ply of the wrapping inner plies is a high ply 2B or 2D. The ply ends 20B and 20D satisfy the relationship where A (apex) < 20B or 20D > the radial location of the maximum section width Wₕ when measured from the nominal bead diameter. Wₕ is the maximum section width of the tire 100.

A flipper 50, which can be formed of radial textile cords 51 similar to those of plies, is located with an inner end Lₗ slightly above the height Bₕ of the bead core 33 and an outer end L_{E} is also shown slightly above the bead core 33 as measured from line YY . The ends L_{I}, L_{E} satisfy a relationship wherein Bₕ < Lₗ and L_{E} < 0. 7D as measured from the nominal bead diameter N_{BD}. To minimize the space occupied by the flipper 50 the cords 51 can be made of a diameter smaller than the ply cords 21.

The carcass further has two carcass plies 2E and 2F herein called outer plies. These outer plies cover the turn-ups 20A through 20D of the inner plies 2A through 2D. The plies 2E and 2F are wound around the bead core 33 over a portion of the circular arc at least past the center of bead core 33 on the radially inner portion. The ply ends 20E and 20F are thus axially inward of the lowest portion of the bead core 33. The ends 20E and 20F are these effectively pinched between the bead core 33 and the rim seat helping to securely anchor these outer plies 2E and 2F.

The tire bead may have an outer chipper 60 of textile cords 61 as shown wrapped around the ends 20E and 20F assuring protection of the carcass plies against injury during mounting. Preferably radially below the chipper 60 is a chafer 11 having a rubber gauge 11 in the range of 0.04 inches (1.0 mm) to 0.16 inches (4.1 mm).

Axially outward of the chafer 11 and the plies 20E and 20F is an elongated strip 8 of elastomeric material extending from radially inward of the bead adjacent the chafer to a radial location at or slightly above the turn-up 20B but below the turn-up 20D. As shown, this strip 8 is interposed between the sidewall rubber 9 and the outer ply 20F. At a location almost equal to the radial height D of the apex location A, the strip 8 has a maximum thickness t. In the tire size shown the maximum thickness t is 0.3 inches (7.6 mm).

The rubber properties of the various bead components are selected to provide a cool running tire under high loads and pressures. When measured the modulus (M300) MPa, of the apex is in the ranges of 20 to 25, the rubber of the plies is in the range of 14 to 18, the strip 8 is in the range of 13 to 16 and the sidewall 9 is in the range of 5 to 8. The material (M300) modulus is based on a cure rate of 80 min@135°C. The above components have the following relationship in terms of modulus apex > ply ³ strip > sidewall. In the illustrated embodiment the rubber properties of the sidewall 9 was 7.2 MPa, the apex was 20.2 MPa ,the inner plies 2A through 2D were 17.0 MPa, the outer plies 2E, 2F were 17.0 and 14.1 MPa, respectively, and the strip 8 was 14.1 MPa.

The resultant structure has the inner plies 2A through 2D and outer plies 2E and 2F closely spaced being separated in the area directly above the apex location A by a thickness of two ply layers extending a distance of over 1.0 inch (25.4 mm), preferably about 1.5 inches (37.6 mm) above the apex location A, which is further reduced to a space of one ply layer thickness or about 0.06 inches (1.5 mm)over a further radially outward distance of less than 1.0 inches (25.4 mm) and then the plies 2D and 2E are adjacent thereafter extending to the opposite bead 30. This creates a very narrow ply path closely approximately the theoretical optimum neutral or natural ply line. Those skilled in the art appreciate the neutral or natural ply line is the location wherein the shear stresses along the ply line are zero. The closer the plies are positioned along the neutral or natural path the less shear energy. When the tire is severely deflected the inner plies 2A through 2D move into tension, being above the neutral or natural ply path while the outer plies 2E and 2D almost adjacent the neutral or natural ply path were slightly compressed most of the compressive strain and shear energy is absorbed by the strip 8. The amount of compressive shear loading is greatly reduced when compared to the prior art tire. This means that the tire can be built with one more inner ply 2D yielding a higher strength tire capable of more load carrying capacity based on the approximately 3.0 inches (76 mm) of flipper length that can be eliminated.

The tire 100 in the example was a 50x20.OR22 tire size having a 32-ply rating, the reduction of the flipper length saved approximately 6Ib per tire. As one can readily appreciate weight saving are very important feature in aircraft tire design. The tire of the exemplary size was made for the Boeing 777 aircraft.

The tire of the present invention provides an unexpected and beneficial weight reduction by reducing the flipper size to the amount needed to prevent the plies 2A-2F, particularly 2D adjacent the bead from fretting and freying due to abrasion against the bead core 3.

The flipper 50 being located well below the apex location A means there is an opportunity to keep the inner plies and the outer plies much closer to the optimum natural ply path. The cords 51 of the flipper can be made equal to or smaller in diameter than the cords 21 of the plies. The cord 51 when made of a diameter of 0.56 mm has a strength of 840 denier/d, at 1.02 mm diameter the cord 51 has a strength of 1890 d/3, at 1.22 mm diameter the cord 51 has 1890 d/4. In each case the textile material was nylon 66.

The ply cords 21 were of the size 1.22 mm in terms of diameter.

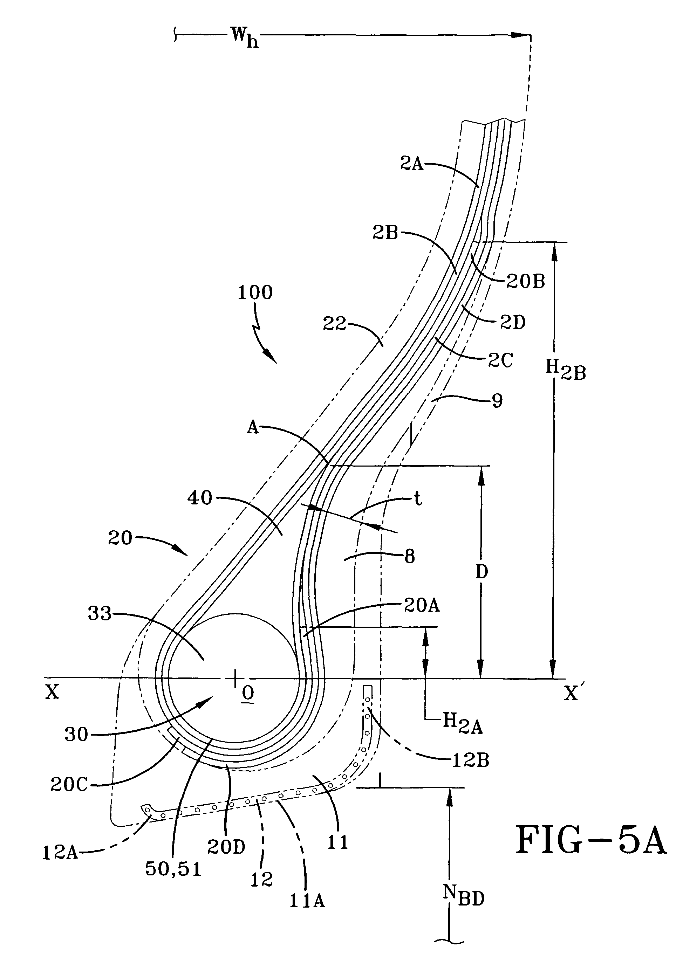

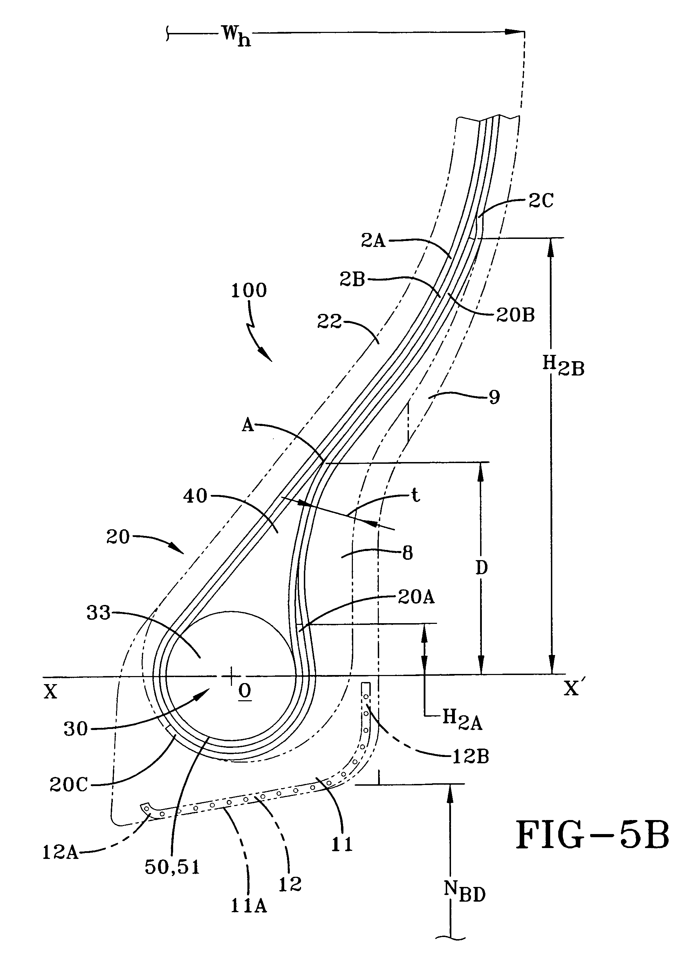

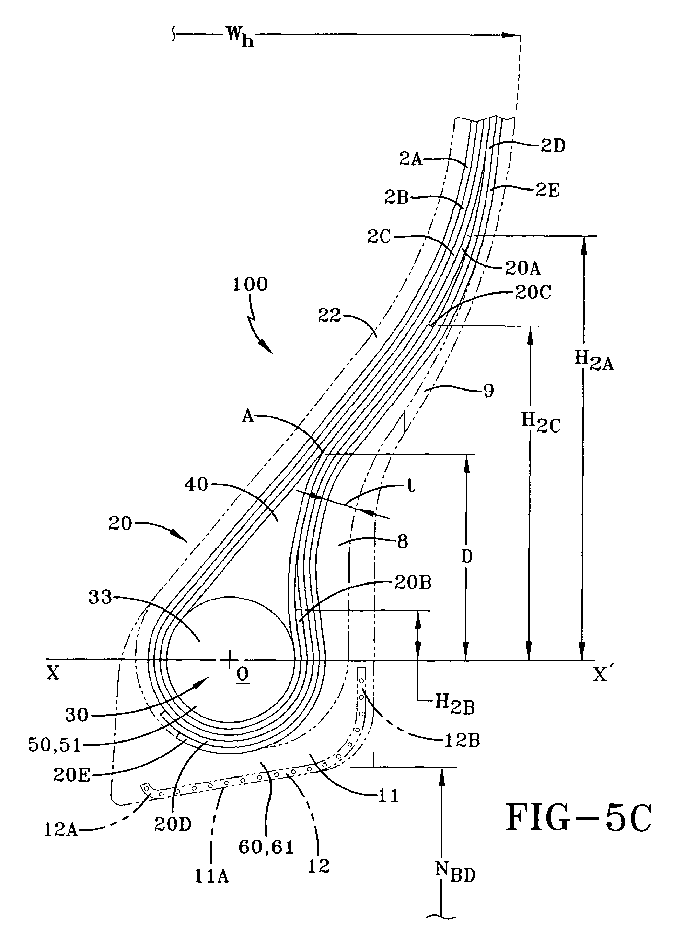

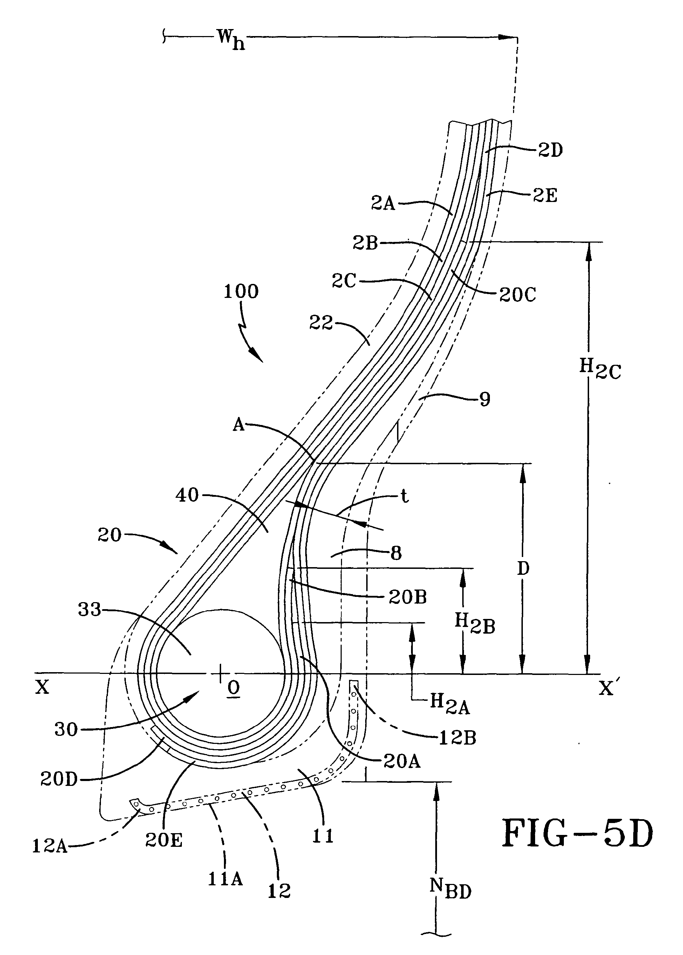

With reference to Figures 5A through 5D, various alternative constructions are illustrated. In Figure 5A, the carcass employs two axially inner plies 2A, 2B and two axially outer plies 2C and 2D. In Figure 5B, the carcass has two axially inner plies 2A, 2B and one axially outer ply 2C. In Figure 5C, the carcass employees three axially inner plies 2A, 2B, and 2C, and two axially outer plies 2D and 2E. In Figure 5D, the carcass has a three ply inner and two ply outer construction as in Figure 5C, but with a variation in the end locations of the respective turnups. Other combinations such as four, five and six axially inner plies in combination with two axially outer plies, are feasible. The additional plies being employed to increase the load carrying capacity of the tires.

The rubber chafer 11, as shown in Figures 2 and 3, has a minimum gauge thickness Z in the range of 0.04 inches (1.0 mm) to 0.16 inches (4.1 mm). The minimum gauge thickness Z when less than 0.04 inches (1.0 mm) can cause the bead base to crack resulting in a slow loss of tire pressure. When the thickness Z exceeds 0.16 inches (4.1 mm) the bead and the plies can rock or rotate back and forth under load. This creates a large amount of movement of the bead under overload conditions. The distance Z is measured under the bead from the radially innermost cord 21 or 61 of a ply 2 or a chipper 60, if used.

The rubber chafer 11 has a radially inner first edge R, and a radially inner second edge R_{E}. Each edge Rₗ and R_{E} is radially located above a line P, P being parallel to the axis of rotation and tangent to the radially innermost location of the bead core 33. Each edge is also located a distance of 50% or less of the distance D as measured from line XX . The benefits of this particular location of the first chafer edge Rₗ is that the tire mounting and unmounting equipment is less prone to catch the edge at this location. The edge Rₗ must be below 50% D because the tensile stresses above 50% D are excessively high and could cause a cracking of the radially inner edge Rₗ under cyclic loading.

The second radially outer edge R_{E} is ideally located above the line P to prevent the plys 20_{E} and 20_{F} from becoming loose in the heel region due to high compressive stresses and strains in this location under severe loads. The edge R_{E} also must be located below 150% of the distance D to prevent the rubber between the outer plies 20_{E} and 20_{F} and the sidewall chafer interface from becoming too high in heat generation under severe overload conditions. This is particularly true due to the hardness of the chafer 11 relative to the sidewall rubber, it being understood that high shore hardness rubbers used in chafer can yield high heat build ups.

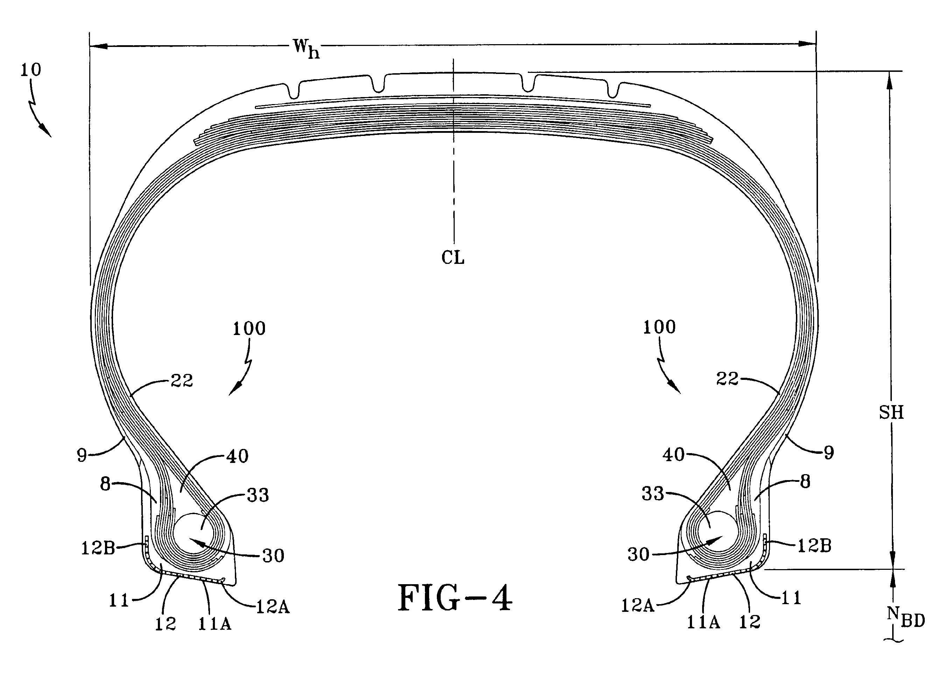

The tire 100 as illustrated in Figures 2, 3, 4 has a chipper reinforcement ply 12 embedded in the chafer 11. The rubber compound of the chafer 11 has a modulus of elasticity (M300) in the range of 5 to 15 MPa. The chipper 12 has a radially inner end 12A and an axially outer end 12B. The radially inner end lies between the bead core 30 and the radially inner surface 11A of the chafer 11. At the terminal end of the end 12A the chipper is turned radially toward the bead core to embed or lock the terminal end 12A in the chafer compound. The entire axially outer end 12A is preferably embedded internally within the chafer 11 along the bead flange area. The chafer 11 should form at least 0.1 inch thick covering over the chipper 12 as shown in this region of the bead flange.

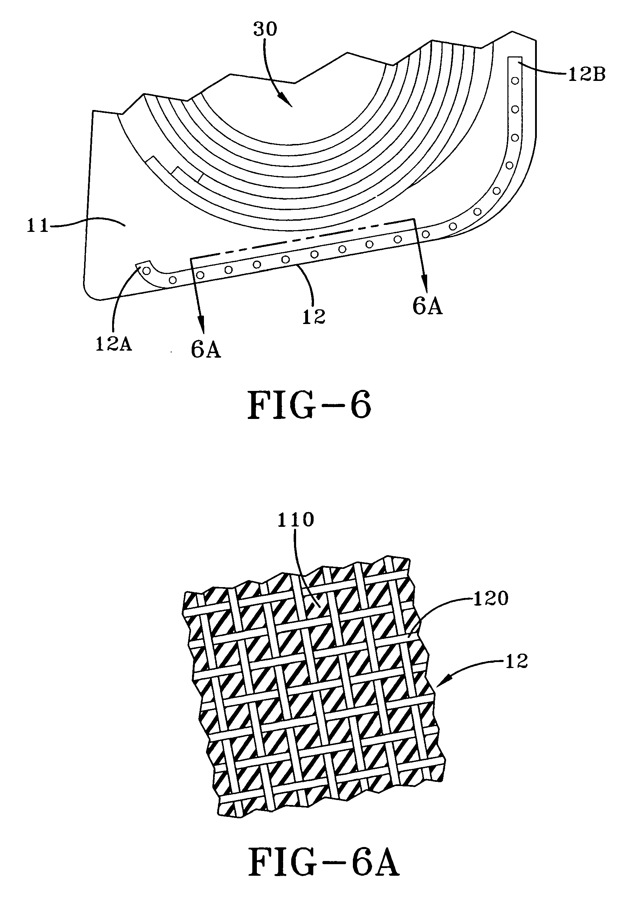

It is important that in the area directly inward of the bead core 30 the chipper 12 comes very close to the surface as shown in Figs. 6 and 6A. The chipper 12 is a square woven material made of a textile material such as nylon 6,6.

Each block 110 of the chafer 11 is bounded by the squares 120. Each square is preferably less than .1 inch. As shown the woven chipper has an 87x87 ends/dm. with a breaking load in Newtons of about 475 or more. The fabric gauge is about 0.5 mm. The rubber chafer 110 by being surrounded in a square 120 provides additional shear strength and this prevents the propagation of cracks in this very critical area.

Heretofore, the use of such woven material in the bead seat area was avoided as it was thought to lead to air leakage paths. The use of monofilament nylon insures the leak paths are not at issue. Furthermore, by having each end 12A and 12B of the chipper embedded in the chafer 11 insures the air seals are maintained.

As can be easily appreciated, the tire of the present invention can result in a very high strength structure of great durability for its otherwise lightweight.

## Claims

1. A pneumatic aircraft tire for use on aircraft having a pair of beads with a nominal bead diameter (N_{BD}), a tread, a crown reinforcement, a radial carcass reinforcement comprising at least one axially inner ply of textile cord wound around a pair of bead cores (33), the bead cores (33) having a radial height (B) as measured from a line (YY') parallel to the axis of the tire and passing through the location of the nominal bead diameter (N_{BD}), wherein the at least one axially inner ply is wound around the bead core (33) in each bead from inside to the outside forming outside turn-ups, and at least one axially outer ply of textile cords extending from bead to bead along the turn-ups of the at least one axially inner ply, each bead having an elastomeric filler (40) of substantially triangular shape with an apex (A) of the filler (40) being located above the bead core (33) and extending a distance (D) as measured from the line (YY') parallel to the axis of the tire and passing through the nominal bead diameter (N_{BD}); and the tire-comprises a chafer (11) having a toe and a heel and the tire has an outer bead face surface which joins the toe and the heel of the chafer (11), **characterized in that** said chafer (11) has a minimum rubber gauge (Z, Z') being in the range of 1.0 mm to 4.1 mm as measured under the bead core (33) from the radially innermost cord (21, 61) of a ply (2F) or, if present, of a chipper (60), wherein in case the chipper (60) is present, the chafer (11) is located radially below the chipper (60); wherein the tire further comprises a chipper reinforcement ply (12) having an axially outer end (12B) and an axially inner end (12A), wherein the chipper reinforcement ply (12) is embedded in the chafer (11), and wherein a portion of the chipper reinforcement ply (12) is positioned along the outer bead face surface which joins the toe and the heel of the chafer (11).

2. The pneumatic tire of claim 1, wherein the chipper reinforcement ply (12) is a woven textile material.

3. The pneumatic tire of claim 1 or 2, wherein the chipper reinforcement ply (12) is made of nylon.

4. The pneumatic tire of at least one of the preceding claims, wherein the woven textile material of the chipper reinforcement ply (12) is a nylon monofilament.

5. The pneumatic tire of at least one of the preceding claims, wherein the square woven material of the chipper reinforcement ply (12) has squares of less than 2.54 mm.

## Patentansprüche

1. Flugzeug-Luftreifen zur Verwendung an Flugzeugen, mit einem Paar Wülsten mit einem Wulst-Nenndurchmesser (N_{BD}), einer Lauffläche, einer Zenitverstärkung, einer radialen Karkassenverstärkung, umfassend mindestens eine axial innere Lage aus Textilkord, die um ein Paar Wulstkerne (33) gewickelt ist, wobei die Wulstkerne (33) eine radiale Höhe (B) aufweisen, gemessen ab einer Linie (YY') parallel zur Achse des Reifens und durch die Stelle des Wulst-Nenndurchmessers (N_{BD}) verlaufend, wobei die mindestens eine axial innere Lage um den Wulstkern (33) in jedem Wulst von innen nach außen herumgewickelt ist, wobei sie Außenumschläge bildet, und mindestens eine axial äußere Lage von Textilkorden, die sich von Wulst zu Wulst entlang den Umschlägen der mindestens einen axial inneren Lage erstrecken, wobei jeder Wulst einen Elastomerkernreiter (40) von im Wesentlichen dreieckiger Form umfasst, wobei ein Kernprofil (A) des Kernreiters (40) sich über dem Wulstkern (33) befindet und sich über einen Abstand (D) erstreckt, gemessen ab der Linie (YY') parallel zur Achse des Reifens und durch den Wulst-Nenndurchmesser (N_{BD}) verlaufend; und der Reifen einen Wulstschutzstreifen (11) mit einer Zehe und einer Ferse umfasst und der Reifen eine äußere Wulstflächen-Oberfläche aufweist, die die Zehe und die Ferse des Wulstschutzstreifens (11) verbindet, **dadurch gekennzeichnet, dass** der Wulstschutzstreifen (11) eine Mindest-Gummidicke (Z, Z') aufweist, die im Bereich von 1,0 mm bis 4,1 mm liegt, gemessen unter dem Wulstkern (33) ab dem radial innersten Kord (21, 61) einer Lage (2F), oder, falls vorhanden, eines Wulstverstärkers (60), wobei, falls der Wulstverstärker (60) vorhanden ist, der Wulstschutzstreifen (11) sich radial unter dem Wulstverstärker (60) befindet; wobei der Reifen weiter eine Wulstverstärker-Verstärkungslage (12), die ein axial äußeres Ende (12B) und ein axial inneres Ende (12A) aufweist, umfasst, wobei die Wulstverstärker-Verstärkungslage (12) in den Wulstschutzstreifen (11) eingebettet ist, und wobei ein Teil der Wulstverstärker-Verstärkungslage (12) entlang der äußeren Wulstflächen-Oberfläche positioniert ist, die die Zehe und die Ferse des Wulstschutzstreifens (11) verbindet.

2. Luftreifen nach Anspruch 1, wobei die Wulstverstärker-Verstärkungslage (12) ein gewebtes Textilmaterial ist.

3. Luftreifen nach Anspruch 1 oder 2, wobei die Wulstverstärker-Verstärkungslage (12) aus Nylon besteht.

4. Luftreifen nach mindestens einem der vorgenannten Ansprüche, wobei das gewebte Textilmaterial der Wulstverstärker-Verstärkungslage (12) ein Nylon-Monofilament ist.

5. Luftreifen nach mindestens einem der vorgenannten Ansprüche, wobei das quadratisch gewebte Material der Wulstverstärker-Verstärkungslage (12) Quadrate von weniger als 2,54 mm aufweist.

## Revendications

1. Bandage pneumatique pour aéroplane à utiliser sur un aéroplane, possédant une paire de talons comprenant un diamètre de talon nominal (N_{BD}), une bande de roulement, un renforcement de sommet de bande de roulement, un renforcement de carcasse radiale comprenant au moins une nappe interne en direction axiale de câblés en textile enroulés autour d'une paire de tringles de talons (33), les tringles de talons (33) possédant une hauteur radiale (B) telle qu'on la mesure à partir d'une ligne (YY') parallèle à l'axe du bandage pneumatique et passant par l'endroit correspondant au diamètre de talon nominal (N_{BD}), ladite au moins une nappe interne en direction axiale venant s'enrouler autour de la tringle de talon (33) dans chaque talon de l'intérieur vers l'extérieur en formant des retournements externes vers le haut, et au moins une nappe externe en direction axiale de câblés en textile s'étendant d'un talon à l'autre le long des retournements vers le haut de ladite au moins une nappe interne en direction axiale, chaque talon possédant une matière de charge élastomère (40) de configuration essentiellement triangulaire, le sommet (A) de la matière de charge 40 étant situé au-dessus de la tringle de talon (33) et s'étendant sur une distance (D) telle qu'on la mesure à partir d'une ligne (YY') parallèle à l'axe du bandage pneumatique et passant par l'endroit correspondant au diamètre de talon nominal (N_{BD}), et le bandage pneumatique comprenant une bandelette talon (11) possédant une extrémité avant et une extrémité arrière et le bandage pneumatique possédant une surface externe sur la face du talon, qui rejoint l'extrémité avant et l'extrémité arrière de la bandelette talon (11), **caractérisé en ce que** ladite bandelette talon (11) possède une épaisseur de caoutchouc minimale (Z, Z') qui se situe dans la plage de 1,0 mm 4,1 mm, telle qu'on la mesure en dessous de la tringle de talon (33) à partir du câblé situé le plus à l'intérieur en direction radiale (21, 61) d'une nappe (2F), ou bien, lorsqu'il est présent, d'un renfort d'appui (60), dans lequel, dans le cas où le renfort d'appui (60) est présent, la bandelette talon (11) est disposée en position radiale en dessous du renfort d'appui (60), le bandage pneumatique comprenant en outre une nappe de renforcement de renfort d'appui (12) possédant une extrémité externe (128) en direction axiale et une extrémité interne (121) en direction axiale, la nappe de renforcement de renfort d'appui (12) étant enrobée de la bandelette talon (11), et une portion de la nappe de renforcement de renfort d'appui (12) étant disposée le long de la surface externe sur la face du talon qui joint l'extrémité avant et l'extrémité arrière de la bandelette talon (11).

2. Bandage pneumatique selon la revendication 1, dans lequel la nappe de renforcement de renfort d'appui (12) est une matière tissée en textile.

3. Bandage pneumatique selon la revendication 1 ou 2, dans lequel la nappe de renforcement de renfort d'appui (12) est réalisée en nylon.

4. Bandage pneumatique selon au moins une des revendications précédentes, dans lequel la matière tissée en textile de la nappe de renforcement de renfort d'appui (12) est un monofilament en nylon.

5. Bandage pneumatique selon au moins une des revendications précédentes, dans lequel la matière tissée en carrés de la nappe de renforcement de renfort d'appui (12) possède des carrés inférieurs à 2,54 mm.
